# EUROPEAN PATENT SPECIFICATION

(11) **EP 4 111 171 B1**
(45) Date of publication and mention of the grant of the patent: **03.04.2024**
(21) Application number: 21712963.4
(22) Date of filing: 26.02.2021
(51) Int. Cl.: G01N 17/00, C25B 1/16, C25B 1/34, C25B 15/029

(54) **AUTOMATIC SUGAR DOSING**
AUTOMATISCHE ZUCKERDOSIERUNG
DOSAGE AUTOMATIQUE DE SUCRE

(30) Priority: 28.02.2020 CN 202010127314
(43) Date of publication of application: 04.01.2023
(73) Proprietor: Bertrams Chemieanlagen AG, 4132 Muttenz (CH)
(72) Inventor: HOSTETTLER, Max, 4654 Lostorf (CH)
(74) Representative: Schneiders & Behrendt Bochum
(86) International application number: PCT/EP2021/054908
(87) International publication number: WO 2021/170836

(56) References cited:
- EP-A1- 0 062 306
- GB-A- 2 221 552
- US-A- 2 610 105
- US-A1- 2014 026 648

## Description

The invention relates to a dosing system for a sugar solution into a caustic stream containing chlorate.

NaOH and KOH are produced by electrolysis of the respective chlorides on an industrial scale. The caustic solutions obtained in these processes regularly contain certain amounts of chlorate, which adversely affect the processing equipment, particularly when made from nickel. In NaOH and KOH flaking plants, equipment at elevated concentration and temperature, especially the supply lines and flaking drums, are made from nickel.

Sugar is used in NaOH and KOH flaking and prilling plants as a corrosion inhibitor. Nickel surfaces in contact with NaOH or KOH solution are prone to corrosion. The higher the concentration and the higher the temperature of the solution, the stronger will be the corrosive attack.

NaOH and KOH solutions regularly contain certain amounts of chlorate (NaClO₃ and KClO₃), which originates from the electrolytic production process. The chlorate also has an impact on the corrosion rate of nickel and adds up to caustic corrosion. The presence of oxygen, also in the form of air, further contributes to the corrosion.

As sugar readily reacts with chlorate, feeding a sugar solution to a caustic stream is suitable to reduce the chlorate content and accordingly the nickel corrosion.

However, correct dosing is a problem, since the chlorate content in a caustic stream may vary. On the other hand, precise sugar dosing has a considerable impact on the lifetime of all equipment made from nickel, like for example tubing and flaker drums. An automatic sugar dosing system therefore has a high potential to save costs for plant operators of NaOH and KOH flaking and prilling plants.

US2014/026648 discloses a general purpose metering system for corrosion inhibitors. A pump (8) circulates a partial volume within a bypass metering circuit comprising a concentration sensor (9). A controller (5) stores a pre-set value of the inhibitor concentration which is compared to the measured value received from the sensor (9). The output signal activates a metering pump (13) to add a volume of the inhibitor to restore the concentration to the pre-set value.

It is therefore desirable to have an automatic sugar dosing system, which provides sugar in dissolved form to a caustic stream that reliably removes the chlorate contained therein by reaction.

Accordingly, the invention provides an automatic sugar dosing system in accordance with the independent claim for feeding sugar solution into a caustic stream containing chlorate, comprising at least one tank for preparing and supplying sugar solution, at least one pump for each tank for supplying sugar solution to the caustic stream, sensors for measuring the chlorate content of the caustic stream and the caustic volume flow, sensors for measuring the sugar concentration, in the sugar solution and the sugar solution volume flow, a local operating panel receiving the measured data from the sensors and calculating the correct dosing rate for the sugar solution, the dosing rate being communicated to the dosing pump.

In the following, caustic means a caustic solution from NaOH or KOH and chlorate NaClO₃ or KCIOs, depending from the respective production plant.

The sugar dosing system of the invention is designed to work automatically which allows adaptation of the sugar dosing according to the actual chlorate content in a caustic stream. The sugar solution is provided in at least one tank and has a concentration in the range of 5% to 10% and a temperature in the range of 25°C to 70°C. A typical flow rate is about 50 l/h. The sugar solution normally is hand made from crystal sugar and tap water.

It is preferred to have two tanks with sugar solution, each tank provided with a stirrer for preparing a homogeneous solution, a low level detection and a dosing pump. This allows switching automatically between the two tanks in case the level in one tank is run down to a lower limit. While sugar solution is provided from the second tank, the first tank can be refilled with sugar solution. Of course, each tank has its own dosing pump, which is activated with the activation of the tank.

In order to provide the right amount of sugar solution to the caustic stream, the system comprises sensors for measuring the chlorate content in the caustic stream and the caustic stream volume flow. Further, there are sensors for measuring the sugar concentration and the sugar solution volume flow. These data are transmitted to a local operating panel for calculation of the correct dosing rate, the dosing rate being communicated to the respective dosing pump.

The local operating panel receives all data which are necessary to calculate the correct dosing rate. In addition, the local operation panel controls the functions of the system, being able to run down the system in case of failure of a component or in case of an alarm. In particular, the switching from a first tank to a second tank and from a first pump to a second pump in case the first tank runs empty is preferably controlled by the panel.

Analysis of the chlorate content takes place by conventional means, e.g. by using the oxidation potential of chlorates, conductivity or ion exchange chromatography.

Preferably, the present sugar dosing system comprises a reactor, where a sample from the caustic stream is prepared for analysis of its chlorate content. Preparation takes place by chemical reaction of the sample in a conventional way including a neutralisation step, using the oxidation potential of chlorate. The reacted sample is then transferred to an analyser for determination of the chlorate content.

In the analyser, the chlorate content is determined and the data transferred to the local operating panel, where it is used to calculate the sugar dosing.

It is preferred that all measurements take place simultaneously in order to adapt the injection of the sugar solution into the caustic stream to the actual chlorate content. Measurements must not take place continuously; measurements in regular intervals are sufficient. It is preferred to have the measurements automated.

The sensors used for the measurements are conventional ones, for example usual flowmeters, for the caustic stream, which must be made from a corrosion resistant material. The concentration of the sugar solution is best measured with a Coriolis device.

The present sugar dosing system may be installed at a place, where it is regularly used. However, it is preferred to mount the system on a skid, which facilitates maintenance by exchanging one skid against another one.

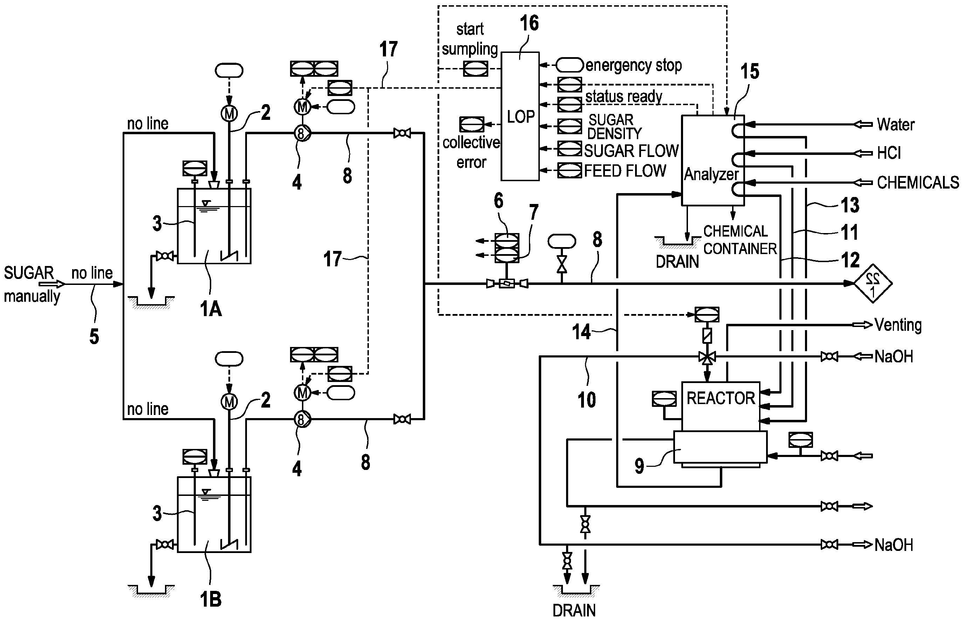

The invention is explained by means of attached Fig. 1, which shows the system by means of a PI-diagram.

Figure 1 is a PI-diagram showing the functioning of the automatic dosing system of the invention. Two sugar tanks 1A and 1B are each equipped with a stirrer 2 and a level switch 3 and connected via line 8 with a dosing pump 4. Fresh water and sugar in solid form are provided via way 5 manually.

Sugar solution is provided by dosing pumps 4 via line 8 to the caustic stream (not shown) to be treated with sugar, sensors 6 for measuring the sugar concentration and 7 for determining the volume flow being connected thereto.

Caustic solution is provided via line 10 and a dosing valve to reactor 9, where it is neutralised, diluted and reacted with chemicals for preparation for chlorate analysis. The prepared solution is transferred via line 14 to analyser 15 for chlorate analysis. The analyser also controls the chemicals and acid used to react the caustic solution in reactor 9. The data then transferred from analyser 15 to the local operating panel 16 for calculation. Local operating panel 16 also receives the data from sensors 6 and 7 and the measured data for the caustic stream volume flow. The calculated data for sugar dosing are then transmitted to the active pump 4.

The chemicals used in reactor 9 are analysed in analyser 15 before being transferred to the reactor 9 through lines 11, 12 and 13. All data are collected in local operating panel 16 for calculation of the sugar feed into the caustic stream.

## Claims

1. Sugar dosing system configured to automatically feed a sugar solution into a caustic stream containing chlorate, comprising
- at least one tank (1A, 1B) for preparing and supplying the sugar solution,
- at least one dosing pump (4) adapted to supply the sugar solution to the caustic stream,
- sensors adapted to measure the chlorate content (15) of the caustic stream and to measure the caustic stream volume flow,
- sensors (6, 7) adapted to measure the sugar concentration and to measure the sugar solution volume flow,
- a local operating panel (16) adapted to receive the measured data from the sensors and further adapted to calculate the correct dosing rate for sugar dosing, the dosing rate being communicated to the dosing pump (4).

2. The sugar dosing system of claim 1 comprising two tanks (1A, 1B) adapted to prepare and supply sugar solution, which work alternatively.

3. The sugar dosing system of claim 2, wherein each tank (1A, 1B) has a level switch for automatic activation of the second tank (1B, 1A), when the first tank (1A, 1B) runs out of sugar solution.

4. The sugar dosing system of claim 2 or 3, wherein each tank (1A, 1B) is equipped with a dosing pump (4).

5. The sugar dosing system of claim 1, wherein each tank (1A, 1B) is provided with a stirrer (2).

6. The sugar dosing system of claim 1 comprising a reactor (9), wherein a caustic sample taken from the caustic stream is prepared for chlorate analysis, the caustic sample being submitted to a chemical reaction.

7. The sugar dosing system of claim 6 comprising an automated dosing valve for taking the caustic sample.

8. The sugar dosing system of claim 1, wherein all measurements take place automatically and simultaneously.

9. The sugar dosing system of claim 1, pre-mounted on a skid.

## Patentansprüche

1. Zuckerdosiersystem zur automatischen Zuführung von Zuckerlösung in einen chlorathaltigen Laugenstrom, umfassend
- mindestens einen Tank (1A, 1B) zum Ansetzen und Zuführen der Zuckerlösung,
- mindestens eine Dosierpumpe (4) zum Zuführen der Zuckerlösung in den Laugenstrom,
- Sensoren zur Messung des Chloratgehalts des Laugenstroms und des Volumenstroms des Laugenstroms,
- Sensoren (6, 7) zur Messung der Zuckerkonzentration und des Zuckerlösungsvolumenstroms,
- ein lokales Bedienfeld (16), das die Messdaten von den Sensoren empfängt und die richtige Dosierrate für die Zuckerdosierung berechnet, wobei die Dosierrate an die Dosierpumpe (4) übermittelt wird.

2. Zuckerdosiersystem nach Anspruch 1, das zwei Tanks (1A, 1B) für die Zubereitung und Zufuhr von Zuckerlösung umfasst, die abwechselnd arbeiten.

3. Zuckerdosiersystem nach Anspruch 2, wobei jeder Tank (1A, 1B) einen Niveauschalter zur automatischen Aktivierung des zweiten Tanks (1B, 1A) aufweist, wenn der erste Tank (1A, 1B) keine Zuckerlösung mehr enthält.

4. Zuckerdosiersystem nach Anspruch 2 oder 3, wobei jeder Tank (1A, 1B) mit einer Dosierpumpe (4) ausgestattet ist.

5. Zuckerdosiersystem nach Anspruch 1, wobei jeder Tank (1A, 1B) mit einem Rührwerk (2) ausgestattet ist.

6. Zuckerdosiersystem nach Anspruch 1, umfassend einen Reaktor (9), in dem eine aus dem Laugenstrom entnommene Laugenprobe für die Chloratanalyse vorbereitet wird, wobei die Laugenprobe einer chemischen Reaktion unterzogen wird.

7. Zuckerdosiersystem nach Anspruch 6, umfassend ein automatisches Dosierventil zur Entnahme der Laugenprobe.

8. Zuckerdosiersystem nach Anspruch 1, wobei alle Messungen automatisch und gleichzeitig erfolgen.

9. Zuckerdosiersystem nach Anspruch 1, vormontiert auf einem Gestell.

## Revendications

1. Système de dosage de sucre conçu pour alimenter automatiquement, en une solution de sucre, un courant caustique contenant du chlorate, le système comprenant :
- au moins un réservoir (1A, 1B) servant à préparer et à fournir la solution de sucre,
- au moins une pompe de dosage (4) adaptée à fournir la solution de sucre au courant caustique,
- des capteurs adaptés à mesurer le contenu de chlorate (15) du courant caustique et à mesurer le débit volumétrique du courant caustique,
- des capteurs (6, 7) adaptés à mesurer la concentration de sucre et à mesurer le débit volumétrique de la solution de sucre,
- un tableau de commande local (16) adapté à recevoir les données mesurées à partir des capteurs et adapté en outre à calculer le taux de dosage adéquat pour le dosage de sucre, le taux de dosage étant communiqué à la pompe de dosage (4).

2. Le système de dosage de sucre de la revendication 1 comprenant deux réservoirs (1A, 1B) adaptés à préparer et à fournir la solution de sucre, lesquels fonctionnent en alternance.

3. Le système de dosage de sucre de la revendication 2, dans lequel chaque réservoir (1A, 1B) comporte un interrupteur de niveau permettant l'activation automatique du second réservoir (1B, 1A) lorsque le premier réservoir (1A, 1B) est à court de solution de sucre.

4. Le système de dosage de sucre des revendications 2 ou 3, dans lequel chaque réservoir (1A, 1B) est doté d'une pompe de dosage (4).

5. Le système de dosage de sucre de la revendication 1, dans lequel chaque réservoir (1A, 1B) est muni d'un agitateur (2).

6. Le système de dosage de sucre de la revendication 1 comprenant un réacteur (9), dans lequel un échantillon de caustique prélevé du courant caustique est préparé à des fins d'analyse de chlorate, l'échantillon de caustique étant soumis à une réaction chimique.

7. Le système de dosage de sucre de la revendication 6 comprenant une soupape de dosage automatisée servant à prélever l'échantillon de caustique.

8. Le système de dosage de sucre de la revendication 1, dans lequel toutes les mesures ont lieu automatiquement et simultanément.

9. Le système de dosage de sucre de la revendication 1, prémonté sur un châssis mobile.
